# EUROPÄISCHE PATENTSCHRIFT

(11) **EP 3 253 696 B1**
(45) Veröffentlichungstag und Bekanntmachung des Hinweises auf die Patenterteilung: **29.06.2022**
(21) Anmeldenummer: 15816732.0
(22) Anmeldetag: 16.12.2015
(51) Int. Cl.: B65G 33/04, B65G 47/30, B67C 7/00, B65G 47/84

(54) **VORRICHTUNG UND VERFAHREN ZUM GESCHWINDIGKEITSABBAU EINES BEHÄLTERSTROMS IN EINER BEHÄLTERBEHANDLUNGSANLAGE**
DEVICE AND METHOD FOR SPEED REDUCTION OF A CONTAINER FLOW IN A CONTAINER TREATMENT PLANT
DISPOSITIF ET PROCÉDÉ DE RALENTISSEMENT D'UN FLUX DE RÉCIPIENTS DANS UNE INSTALLATION DE MANIPULATION DE RÉCIPIENTS

(30) Priorität: 03.02.2015 DE 102015201852
(43) Veröffentlichungstag der Anmeldung: 13.12.2017
(73) Patentinhaber: Krones AG, 93073 Neutraubling (DE)
(72) Erfinder: FISCHER, Harald, 93073 Neutraubling (DE); STEIMMER, Juergen, 93073 Neutraubling (DE)
(74) Vertreter: Grünecker Patent- und Rechtsanwälte PartG mbB
(86) Internationale Anmeldenummer: PCT/EP2015/080005
(87) Internationale Veröffentlichungsnummer: WO 2016/124287

(56) Entgegenhaltungen:
- EP-A1- 0 798 262
- DE-A1- 4 128 733
- FR-A1- 2 426 014
- JP-A- S58 162 423
- JP-A- 2014 148 372
- JP-U- H0 234 521
- JP-U- S5 123 976
- JP-U- S5 539 977
- JP-U- S62 108 310
- US-A- 4 834 826
- US-A1- 2015 014 127

## Beschreibung

### Gebiet der Erfindung

Die vorliegende Erfindung betrifft eine Transporteinrichtung und ein Verfahren zum Geschwindigkeitsabbau bzw. Teilungsverzug eines Behälterstroms in einer Behälterbehandlungsanlage mit einer Einteilschnecke.

### Stand der Technik

Bei Behälterbehandlungsanlagen werden Behälter, wie z. B. Flaschen, Dosen oder ähnliche, in einem oder mehreren aufeinanderfolgenden Prozessschritten behandelt. Eine Untereinheit einer Behälterbehandlungsanlage, ein sogenannter Block, kann beispielsweise eine Abfülleinheit zum Befüllen der Behälter, eine Etikettiervorrichtung, eine Inspektionseinheit und/oder eine Verpackungseinheit zum Bilden und Verpacken von Behältergebinden umfassen. Dabei werden die zu behandelnden Behälter im Allgemeinen in den verschiedenen Behandlungseinheiten als kontinuierliche Behälterströme mit unterschiedlichen Geschwindigkeiten transportiert und behandelt, welche durch die Ausbildung und Technik der jeweiligen Behandlungseinheit vorgegeben sind.

Um die Kontinuität des gesamten Behälterstroms durch die Untereinheit zu garantieren, müssen die Behälter somit aufgrund ihrer unterschiedlichen Geschwindigkeiten in unterschiedlichen Abschnitten einer die Behandlungseinheiten verbindenden Transporteinrichtung mit unterschiedlichen Teilungen, d. h. Abständen aufeinanderfolgender Behälter, transportiert werden.

Beispielsweise werden bei der Zusammenfassung und Verpackung von einzelnen Behälter, wie z. B. von befüllten Flaschen, diese im Allgemeinen nacheinander von einer Behandlungseinheit, beispielsweise einer Abfülleinheit oder einer Etikettiervorrichtung, über einen vorgegebenen Transportweg befördert, um in nachfolgenden Verarbeitungsstufen weiter behandelt und/oder zu Gebinden zusammengefasst und/oder anderweitig verpackt zu werden. Die am Auslauf der Abfülleinheit bzw. Etikettiervorrichtung vorliegende hohe Transportgeschwindigkeit erfordert dabei ein relativ aufwändiges Behälter- und/oder Gebindehandling, was leicht zu Fehlern oder Störungen des Prozessablaufs führen kann. Auch der Transport der Behälter an sich ist relativ störanfällig.

Zur Umgehung der oben beschriebenen Probleme werden die Behälter im Nachlauf zu einer Abfülleinheit bzw. Etikettiervorrichtung daher im Allgemeinen mittels einer Einteilschnecke mit abnehmender Teilung, d. h. abnehmendem Abstand zwischen benachbarten Gewindekerben, von einer der vorgeschalteten Behandlungseinheit entsprechenden Einlaufteilung auf eine der nachgeschalteten Behandlungseinheit entsprechenden Auslaufteilung verzögert, wodurch ein Geschwindigkeitsabbau bzw. eine Teilungsverzögerung des die Einteilschnecke passierenden Behälterstroms erzielt wird. Dabei muss die Einteilschnecke umso länger sein, je größer der Unterschied zwischen Einlaufteilung und Auslaufteilung ist. Insbesondere bei Auffächerung eines einspurigen Behälterstroms, beispielsweise durch eine Sortiervorrichtung, in mehrere Behälterströme und anschließendes Zusammenfassen der Behälter der jeweiligen Behälterströme zu Gebinden können erhebliche Teilungsunterschiede entstehen, die nur unzulänglich mit einer einzelnen Einteilschnecke überbrückt werden können. Häufig werden dabei im Stand der Technik aufwändig Konstruktionen mit Bremselementen oder Durchlaufsperren vorgeschlagen, um solche Teilungsunterschiede zu überbrücken.

Das US-Patent US 4,834,826 offenbart eine Einteilschnecke mit einer Freidrehung an ihrem Einlauf, die am Einlauf eines Rundläufertischs angeordnet ist. Die Offenlegungsschrift DE 41 28 733 A1 offenbart eine Förderschnecke mit einem zylindrischen Zapfen, von dem stetig ein Gewindezug ausgeht, dessen Steilheit in Förderrichtung abnimmt. DE 41 28 733 A1 offenbart eine Transporteinrichtung nach dem Oberbegriff des Anspruchs 1.

Es liegt somit der vorliegenden Erfindung die Aufgabe zugrunde, eine Vorrichtung und ein Verfahren zum Transport von Behältern in einer Behälterbehandlungsanlage zur Verfügung zu stellen, die es erlaubt, Behälter möglichst schnell auf eine niedrige Transportgeschwindigkeit zu bringen und weitgehend störungsfrei von einer ersten Behandlungseinheit, beispielsweise einer Etikettiervorrichtung, zu einer weiteren Behandlungseinheit, beispielsweise einer Verpackungsvorrichtung, zu transportieren.

### Beschreibung der Erfindung

Die oben genannte Aufgabe wird gelöst durch eine Transporteinrichtung gemäß Patentanspruch 1, eine Behälterbehandlungsanlage gemäß Patentanspruch 9 und einem Verfahren gemäß Patentanspruch 10. Bevorzugte Ausführungsformen werden in den abhängigen Patentansprüchen beschrieben.

Einteilschnecken als Mittel zum Anpassen einer Teilung eines, im Allgemeinen einspurigen, Behälterstroms sind im Stand der Technik wohl bekannt. Dabei werden der Einteilschnecke an ihrem Einlauf Behälter mit einer vorgegebenen Einlaufteilung und Einlaufgeschwindigkeit zugeführt. Die Behälter werden im Allgemeinen einzeln von einem Gewinde der Einteilschnecke aufgenommen und aufgrund einer Rotation der Einteilschnecke mit einer vorgegebenen Rotationsgeschwindigkeit entlang der Einteilschnecke zu deren Auslauf geführt. Aufgrund einer ab- oder zunehmenden Teilung bzw. Steigung der Einteilschnecke wird dabei die Teilung des Behälterstroms vergrößert oder verkleinert. Entscheidend für die Teilung des auslaufenden Behälterstroms ist dabei die Teilung des letzten Gangs der Einteilschnecke an ihrem Auslauf.

Hier und im Folgenden ist unter einer Teilung eines Gewindes einer Einteilschnecke ein Abstand zwischen benachbarten Gewindekerben zu verstehen. Unter der Steigung ist der Weg des Gewindes zu verstehen, der durch eine Umdrehung zurückgelegt wird. Bei eingängigen Gewinden entspricht die Teilung der Steigung. Bei mehrgängigen, wie den zum Sortieren verwendeten doppelgängigen, Gewinden entspricht die Teilung der Steigung geteilt durch die Gangzahl. Die im Folgenden beschriebenen Ausführungsformen lassen sich sowohl mit eingängigen als auch mit mehrgängigen Einteilschnecken realisieren. Bei Verwendung von mehrgängigen Einteilschnecken ist unter Umständen die Rotationsgeschwindigkeit der Einteilschnecke aufgrund der entsprechend größeren Steigung zu reduzieren, um eine gewünschte Auslaufgeschwindigkeit der Behälter zu erhalten. Der einfacheren Darstellung halber wird im Folgenden ohne Einschränkung angenommen, dass es sich bei den verwendeten Einteilschnecken um eingängige Einteilschnecken handelt.

Anders als bei bekannten Einteilschnecken, die den Geschwindigkeitsabbau vollständig mittels einer abnehmenden Teilung bewerkstelligen, weist die erfindungsgemäße Einteilschnecke an ihrem Einlauf eine Freidrehung, d. h. einen Abschnitt ohne Gewinde, auf. In diesem Teil der Einteilschnecke kann sich die Einteilschnecke frei drehen, ohne einen Behälter aufzunehmen. Ebenso können Behälter, die mit dem freidrehenden Teil in Eingriff, d. h. in mechanischem Kontakt, stehen, entlang einer Längsachse der Einteilschnecke frei verschoben werden bzw. gleiten. Insbesondere kann ein einlaufender Behälter mit seiner Einlaufgeschwindigkeit am freidrehenden Teil der Einteilschnecke entlang gleiten, um dann seine überschüssige Bewegungsenergie beim Anschlag an die Flanken des ersten Gangs, d. h. die erste Gewindedrehung, schlagartig zu verlieren. Hierbei bezeichnet die überschüssige Bewegungsenergie die dem Geschwindigkeitsunterschied zwischen Einlaufgeschwindigkeit und Auslaufgeschwindigkeit zuzuordnende kinetische Energie. Ein Teil dieser Energie kann durch Wahl von Materialien mit geeigneten Reibungskoeffizienten für die Oberfläche des freidrehenden Teils der Einteilschnecke, wie z. B. verschleißarmen Kunststoffen, bereits vor dem Anschlag an die Flanken des ersten Gangs durch Reibung dissipiert werden.

Die Querschnittsform des freidrehenden Teils der Einteilschnecke ist beliebig, solange sie rotationssymmetrisch um die Längsachse der Einteilschnecke ist, also insbesondere kein Gewinde aufweist. Im einfachsten Fall kann es sich um eine zylindrische Freidrehung handeln, wobei bevorzugt der Durchmesser des Zylinders dem Kerndurchmesser, d. h. dem minimalen Durchmesser, des nachfolgenden ersten Gangs entspricht. Denkbar ist aber auch eine Kegelform, die Form eines halben Hyperboloids, eine Glockenform, oder ähnliches. Dabei ist die entsprechende Form bevorzugt so angeordnet, dass ihr zunehmender oder abnehmender Durchmesser stetig in den Kerndurchmesser des ersten Gangs übergeht. Bei Verwendung eines Transfersterns zur Übergabe der Behälter an den freidrehenden Teil der Einteilschnecke (siehe unten) kann beispielsweise ein Kegel oder Hyberboloid mit abnehmendem Durchmesser zur Verkürzung der Minimallänge des freidrehenden Teils (siehe ebenfalls unten) verwendet werden. Umgekehrt kann ein freidrehender Teil mit entlang der Freidrehung zunehmendem Durchmesser, insbesondere bei Verwendung seitlicher Gegenspannelemente entlang der Freidrehung, beispielsweise seitlich federnd gelagerter Führungselemente, zum Abbremsen der Behälterbewegung entlang der Freidrehung verwendet werden.

Die Art des Gewindes der Einteilschnecke, insbesondere die Form der Gewindekerbe bzw. des Gewindegangs und der Gewindeflanken, kann in Abhängigkeit von der zu befördernden Behälterform vorgegeben werden. Beispielsweise sind Trapezgewinde, gerundete Trapezgewinde oder Rundgewinde denkbar. Je nach Form des Gewindes kann das Gewinde der Einteilschnecke in Eingriff mit einem rotationssymmetrischen Abschnitt eines Behälters, beispielsweise einer Verschlusskappe, einem Flaschenhals, einem Dosenquerschnitt, oder dergleichen, gebracht werden, oder aber auch bei entsprechender Ausrichtung des Behälters während der Zufuhr zur Einteilschnecke mit einem nicht rotationssymmetrischen Abschnitt des Behälters, beispielsweise mit einem Abschnitt mit ovalem Querschnitt. Zum Befördern von Flaschen oder flaschenähnlichen Behältern kann die Einteilschnecke im Allgemeinen in Eingriff mit dem verjüngten Teil der Flasche gebracht werden. Dabei ist zu berücksichtigen, dass die Teilung der Einteilschnecke den maximalen Durchmesser der in Eingriff stehenden Behälter in Förderrichtung nicht unterschreiten darf. Der Flankenabstand eines jeden Gewindegangs entspricht weiterhin mindestens dem Durchmesser des in Eingriff stehenden Abschnitts des Behälters in Förderrichtung.

Aus dem Vorstehenden ergibt sich, dass die Einteilschnecke im Allgemeinen spezifisch für eine zu transportierende Behälterform und -größe sowie eine spezifische Auslaufteilung eingesetzt wird. Bei einem Produktwechsel, der einen anderen Behältertyp erfordert, muss die Einteilschnecke dabei im Allgemeinen ausgetauscht werden. Aufgrund der Freidrehung im Einlauf der Einteilschnecke ergibt sich jedoch eine gewisse Flexibilität bzgl. der Einlaufteilung bzw. Einlaufgeschwindigkeit. Eine mit einer Freidrehung versehene Einteilschnecke kann somit einen einlaufenden Behälterstrom mit einer in einem vorgegebenen Bereich liegenden Einlaufteilung befördern.

Gemäß einer Weiterbildung kann die Einteilschnecke eine konstante Teilung haben. In diesem Fall findet der Geschwindigkeitsabbau zwischen einlaufendem Behälterstrom und auslaufendem Behälterstrom vollständig im Bereich des freidrehenden Teils der Einteilschnecke statt. Bei dieser Weiterbildung werden die Behälter somit lediglich entlang des Gewindes der Einteilschnecke mit konstanter Geschwindigkeit geführt, so dass dieser Teil der Einteilschnecke erheblich verkürzt werden kann. Beispielsweise kann eine üblicherweise 700 - 1100 mm lange Einteilschnecke ohne Freidrehung aufgrund der erfindungsgemäßen Weiterbildung mit Freidrehung auf 250 - 350 mm verkürzt werden. Dadurch kann die gesamte Anlage kompakter ausgelegt werden oder die Einteilschnecke auch an Stellen eingesetzt werden, an denen die bisher bekannten Einteilschnecken ob ihrer Länge nicht eingesetzt werden konnten.

Gemäß einer alternativen Weiterbildung kann die Einteilschnecke aber auch eine von ihrem Einlauf zu ihrem Auslauf hin abnehmende Teilung aufweisen. Somit findet zusätzlich zu dem Geschwindigkeitsabbau bzw. Teilungsverzug aufgrund der Freidrehung der Einteilschnecke ein weiterer Teilungsverzug entlang des Gewindes der Einteilschnecke statt. Der kombinierte Teilungsverzug kann dabei erhebliche Unterschiede zwischen Einlaufteilung und Auslaufteilung überbrücken, wie sie beispielsweise beim Auffächern eines einspurigen Behälterstroms auf mehrere Behälterströme und bei Sortierverfahren auftreten können. Beispielsweise ist mit einer derartigen Einteilschnecke ein Teilungsverzug von 300 mm Einlaufteilung auf 100 mm Auslaufteilung ohne hohe Störungsanfälligkeit möglich.

Gemäß einer Weiterbildung kann die Einteilschnecke dazu ausgebildet sein, eine Teilung eines einlaufenden Behälterstroms von einer Einlaufteilung auf eine Auslaufteilung eines auslaufenden Behälterstroms zu reduzieren, wobei eine Länge der Freidrehung, entlang der Längsachse der Einteilschnecke, mindestens eine Länge beträgt, die aus der Summe aus der Differenz der Einlaufteilung minus der Auslaufteilung und einem Durchmesser der zu transportierenden Behälter berechnet wird. Dabei entspricht der Durchmesser der zu transportierenden Behälter dem maximalen Durchmesser der zu transportierenden Behälter in Förderrichtung. Der oben angegebene Mindestwert kann reduziert werden, wenn die Einteilschnecke wie in der vorigen Ausführungsform ein Gewinde mit abnehmender Teilung aufweist. In diesem Fall entspricht der Mindestwert der Summe aus der Differenz der Einlaufteilung minus der Teilung des ersten Gewindegangs und dem Durchmesser der zu transportierenden Behälter. Der Behälterdurchmesser wird in den genannten Mindestwerten berücksichtigt, da der Behälter bei Übergabe durch einen Transferstern an den freidrehenden Teil der Einteilschnecke zunächst durch Weiterdrehen des Transfersterns freigegeben werden muss, bevor ein Teilungsverzug einsetzen kann. Eine solche Freigabe tritt dabei durch Weiterdrehen des Transfersterns um 10° bis 15° ein, was in etwa dem Behälterdurchmesser entspricht. Wie oben bereits erwähnt, kann dieser Mindestwert weiter reduziert werden, wenn statt einer zylindrischen Freidrehung mit konstantem Durchmesser eine Freidrehung mit abnehmendem Durchmesser, beispielsweise in Form eines halben Hyperboloids, eingesetzt wird. Durch den abnehmenden Durchmesser erfolgt eine Freigabe des in Eingriff mit dem Transferstern stehenden Behälters bereits bei einem geringeren Winkel als bei einer zylindrischen Freidrehung.

Gemäß einer weiteren Weiterbildung kann eine Länge der Freidrehung mindestens 80 mm, bevorzugt mindestens 100 mm, besonders bevorzugt mindestens 120 mm betragen. Eine größere Länge gestattet hierbei, einen größeren Bereich an Einlaufteilungen abzudecken, die mit der gewünschten Auslaufteilung nach der oben beschriebenen Formel kompatibel sind. Bei geeigneter Wahl der Länge der Freidrehung lässt sich dieselbe Einteilschnecke für eine vorgegebene Einlaufteilung und das Doppelte dieser Teilung einsetzen, wodurch flexibel zwischen einem einfachen Behälterstrom und einer Sortierung gewechselt werden kann. Zum Übergang von einem Weitertransport des gesamten einlaufenden Behälterstroms durch die Einteilschnecke auf eine Sortierung, bei der nur jeder zweite Behälter von der Einteilschnecke weitertransportiert werden soll, kann beispielsweise die Rotationsgeschwindigkeit des Transfersterns, mit dem die Behälter an die Einteilschnecke übergeben werden, verdoppelt werden, während die Rotationsgeschwindigkeit der Einteilschnecke konstant bleibt.

Die erfindungsgemäße Transporteinrichtung umfasst weiterhin ein Transportband oder eine Transportkette, welches oder welche mindestens entlang der gesamten Länge der Einteilschnecke derart angeordnet ist, dass mit der Einteilschnecke in Eingriff stehende Behälter darauf aufstehen. Das Transportband bzw. die Transportkette ist dabei umlaufend ausgebildet, wobei die Behälter während des Transports durch die Einteilschnecke auf dem Obertrum des Transportbandes bzw. der Transportkette mit ihrem Behälterboden aufstehen. Das Transportband bzw. die Transportkette kann hierzu parallel zu der Einteilschnecke in einem Abstand angeordnet sein, der von der Höhe der zu transportierenden Behälter und der Stelle der Behälter, an der das Gewinde der Einteilschnecke eingreift, abhängt. Um unterschiedliche Behältertypen bzw. - höhen handhaben zu können, können das Transportband bzw. die Transportkette und/oder die Einteilschnecke zueinander verfahrbar ausgebildet sein. Bevorzugt werden die Behälter entlang der Einteilschnecke somit aufrecht stehend transportiert. Dabei erstreckt sich das Transportband bzw. die Transportkette mindestens über die gesamte Länge der Einteilschnecke. Somit können Behälter schon unmittelbar, wenn sie in Eingriff mit der Einteilschnecke gebracht werden, auf das Transportband bzw. die Transportkette gestellt werden. Die Oberfläche bzw. das Material des Transportband bzw. der Transportkette kann dabei derart gewählt werden, dass die zu transportierenden Behälter, ohne zu kippen, entlang der Freidrehung der Einteilschnecke über das Transportbands bzw. die Transportkette rutschen bzw. gleiten können. Beispielsweise ist eine nicht rutschfeste Kunststoffoberfläche oder eine Metalloberfläche denkbar. Bei Metalloberflächen kann zusätzlich ein Schmiermittel eingesetzt werden (Trocken- oder Nassschmierung).

Die erfindungsgemäße Transporteinrichtung umfasst weiterhin einen Antrieb für das Transportband oder die Transportkette und eine Steuer- und/oder Regeleinrichtung, die dazu ausgebildet ist, den Antrieb derart zu steuern und/oder zu regeln, dass das Transportband oder die Transportkette synchron mit einer Geschwindigkeit der Behälter am Auslauf der Einteilschnecke umläuft. Antriebe und Steuer- und/oder Regeleinrichtungen für Transportbänder bzw. -ketten sind im Stand der Technik wohl bekannt und werden daher hier nicht weiter erläutert. Durch den geregelten bzw. gesteuerten Antrieb angetrieben läuft das Transportband bzw. die Transportkette gemäß dieser Weiterbildung mit einer konstanten Geschwindigkeit um, die der Geschwindigkeit der Behälter am Auslauf der Einteilschnecke entspricht. Die Steuer- und/oder Regeleinrichtung kann dabei insbesondere auch einen Antrieb steuern und/oder regeln, der die Einteilschnecke dreht. Dabei wird entweder die Umlaufgeschwindigkeit des Transportbands bzw. der Transportkette der Rotationsgeschwindigkeit der Einteilschnecke angepasst, oder umgekehrt die Rotationsgeschwindigkeit der Einteilschnecke der Umlaufgeschwindigkeit des Transportbands bzw. der Transportkette angepasst. In jedem Fall entspricht die Umlaufgeschwindigkeit des Transportbands bzw. der Transportkette der Auslaufgeschwindigkeit der Behälter aufgrund der Rotation der Einteilschnecke, so dass die Behälter ohne die Gefahr des Kippens von der Einteilschnecke freigegeben werden können.

Da das Transportband bzw. die Transportkette gemäß der Erfindung mit einer Geschwindigkeit umläuft, die der Geschwindigkeit der Behälter am Auslauf der Einteilschnecke entspricht, ist die Geschwindigkeit des Transportbands bzw. der Transportkette somit geringer als die Geschwindigkeit der Behälter am Einlauf der Einteilschnecke. Das Transportband bzw. die Transportkette wirkt somit aufgrund der Reibung mit den auf dem Transportband bzw. der Transportkette aufstehenden Behältern verzögernd auf die Behälterbewegung am Einlauf der Einteilschnecke. Durch Rutschen bzw. Gleiten der Behälterböden über die Oberfläche des Transportbands bzw. der Transportkette wird somit bereits ein Teil der überschüssigen Bewegungsenergie der Behälter dissipiert, bevor die Behälter durch Anschlag an den ersten Gang der Einteilschnecke auf die jeweilige Teilung des ersten Gangs abgebremst werden. Dabei kann die Oberfläche wie oben beschrieben derart gewählt werden, dass ein Kippen der Behälter vermieden werden kann.

Die erfindungsgemäße Transporteinrichtung umfasst weiterhin einen Transferstern, der derart am Einlauf der Einteilschnecke angeordnet ist, dass in Eingriff mit dem Transferstern stehende Behälter in Eingriff mit dem freidrehenden Teil der Einteilschnecke gebracht und auf das Transportband oder die Transportkette gestellt werden können. Transfersterne zur Übergabe von Behälter von einer Behandlungseinheit wie einer Rundläufermaschine an eine Einteilschnecke sind im Stand der Technik bekannt. Die Transfersterne werden dabei derart angeordnet, dass die jeweilige Einteilschnecke tangential an dem Umfang des Transfersterns angeordnet ist. Auch bei der vorliegenden Weiterbildung ist dies der Fall, wobei der Transferstern zusätzlich derart bzgl. der Einteilschnecke angeordnet ist, dass die von dem Transferstern transportierten Behälter in Eingriff mit dem freidrehenden Teil der Einteilschnecke gebracht werden können. Bevorzugt kann die Übergabe an den freidrehenden Teil der Einteilschnecke bereits zu Beginn, bzgl. des Einlaufs der Einteilschnecke, des freidrehenden Teils erfolgen. Dabei kann der Transferstern weiterhin derart angeordnet sein, dass die Böden der von ihm transportierten Behälter niveaugleich mit dem Transportband bzw. der Transportkette sind, so dass ein störungsfreies Absetzen der in Eingriff mit dem Transferstern stehenden Behälter auf das Transportband bzw. die Transportkette erfolgen kann.

Gemäß einer weiteren Weiterbildung kann umfangseitig entlang eines Segments des Transfersterns ein gekrümmtes Führungselement derart angeordnet sein, dass in Eingriff mit dem Transferstern stehende Behälter entlang des gekrümmten Führungselements bis zum freidrehenden Teil der Einteilschnecke geführt werden können. Das Segment des Transfersterns kann hierbei ein Viertelkreissegment sein, welches sich von dem freidrehenden Teil der Einteilschnecke 90° entlang des Umfangs des Transfersterns entgegen dessen Drehrichtung erstreckt. Somit können zwischen dem entlang dieses Segments angeordneten Führungselement und dem Transferstern die in Eingriff mit dem Transferstern stehenden Behälter sicher geführt werden, bis sie an den freidrehenden Teil der Einteilschnecke übergeben werden. Als Führungselemente können beispielsweise Führungsgeländer, Führungsbleche oder andere im Stand der Technik bekannte Führungselemente eingesetzt werden. Das Führungselement kann dabei derart angeordnet sein, dass seine zur Einteilschnecke auslaufende Kante in Draufsicht in einer Flucht mit der Oberfläche des freidrehenden Teils der Einteilschnecke liegt.

Gemäß einer Weiterbildung kann die Transporteinrichtung weiterhin ein geradliniges Führungselement umfassen, das parallel zur Einteilschnecke angeordnet ist, wobei sich das geradlinige Führungselement insbesondere mindestens über den freidrehenden Teil und einen ersten Gang der Einteilschnecke erstrecken kann. Das geradlinige Führungselement kann dabei derart angeordnet sein, dass die von der Einteilschnecke transportierten Behälter stabil zwischen der Einteilschnecke und dem Führungselement geführt werden können. Da im Bereich des freidrehenden Teils der Einteilschnecke insbesondere aufgrund der Geschwindigkeitsdifferenz zwischen Transportband bzw. Transportkette und Behälter Inertialkräfte auf den Behälter wirken, erhöht der Einsatz eines solchen Führungselements die Stabilität der Behälterführung. Insbesondere kann das geradlinige Führungselement entlang der gesamten Länge der Einteilschnecke angeordnet sein. Auch hier sind Führungsgeländer, Führungsbleche oder andere im Stand der Technik bekannte Führungselemente denkbar. In einer speziellen Weiterbildung kann ein geradliniges Führungselement parallel zur Einteilschnecke auf der Höhe der Einteilschnecke selbst angeordnet sein, um den in Eingriff mit der Einteilschnecke stehenden Abschnitt des Behälters stabil führen zu können.

Gemäß einer Weiterbildung kann die Transporteinrichtung weiterhin mindestens eine erste und eine zweite Einteilschnecke umfassen, wobei die zweite Einteilschnecke ebenfalls eine Freidrehung aufweist und die gleiche Teilung wie die erste Einteilschnecke, aber eine von einer Gewindegangbreite der ersten Einteilschnecke verschiedene Gewindegangbreite hat, und wobei die zweite Einteilschnecke derart parallel zur ersten Einteilschnecke angeordnet ist, dass die Freidrehungen der ersten und der zweiten Einteilschnecke zumindest teilweise überlappen und ein mit einem ersten Behälterabschnitt in Eingriff mit der ersten Einteilschnecke stehender Behälter mit einem zweiten Behälterabschnitt in Eingriff mit der zweiten Einteilschnecke stehen kann.

In der einfachsten Ausführung umfasst die zuvor beschriebene Transporteinrichtung lediglich eine erfindungsgemäße Einteilschnecke. Zur besseren Stabilisierung der transportierten Behälter kann die Transporteinrichtung aber mindestens eine weitere, zweite Einteilschnecke umfassen, die ähnlich wie die erste Einteilschnecke gebaut ist. Die zweite Einteilschnecke weist in ihrem Einlauf ebenfalls eine Freidrehung auf und ist parallel zur ersten Einteilschnecke angeordnet. Insbesondere kann die zweite Einteilschnecke vertikal, bzgl. einer Aufstandfläche der Transporteinrichtung, verschoben gegenüber der ersten Einteilschnecke angeordnet sein. Dabei überlappen sich die Freidrehungen der beiden Einteilschnecken zumindest teilweise, so dass ein Behälter, der in Eingriff sowohl mit der ersten Einteilschnecke als auch mit der zweiten Einteilschnecke steht, entlang der sich überlappenden Freidrehungen rutschen bzw. gleiten kann. Bevorzugt setzt dabei die zweite Freidrehung bzgl. der gemeinsamen Transportstrecke der beiden Einteilschnecken an derselben Stelle an wie die erste Freidrehung, so dass ein an die Einteilschnecken zu übergebender Behälter annähernd gleichzeitig in Eingriff mit beiden Freidrehungen gebracht werden kann.

Gemäß dieser Weiterbildung weist die zweite Einteilschnecke die gleiche Teilung auf wie die erste Einteilschnecke, damit Behälter, die in Eingriff mit beiden Einteilschnecken stehen, synchron transportiert werden können und beim Transport nicht verschert werden. Allerdings ist die Gewindegangbreite der zweiten Einteilschnecke nach dieser Weiterbildung verschieden von der Gewindegangbreite der ersten Einteilschnecke. Unter Gewindegangbreite ist hier und im Folgenden eine in Förderrichtung gemessene Maximalbreite des durch den Gewindegang gebildeten Eingriffs für den zu transportierenden Behälter zu verstehen. Für den Fall geradliniger oder konkaver, d. h. ausschließlich positiv gekrümmter, Flanken ist die Gewindegangbreite durch den maximalen Abstand der Flanken des jeweiligen Gewindegangs gegeben. Anders ausgedrückt können Einteilschnecken mit größerer Gewindegangbreite Behälter mit einem größeren Querschnittsdurchmesser aufnehmen.

Eine solche Anordnung eignet sich besonders zum stabilen Geschwindigkeitsabbau von sich entlang einer Längsachse verjüngenden Behälter, wie beispielsweise Flaschen. So kann beispielsweise eine erste Einteilschnecke mit einer kleinen Gewindegangbreite in Eingriff mit den Flaschenhälsen oder -verschlüssen stehen, während eine zweite Einteilschnecke mit einer größeren Gewindegangbreite in Eingriff mit den Flaschenbäuchen stehen kann. Somit wird die Flasche während des Transports an zwei Stellen sicher gehalten, so dass sie nicht kippen kann. Es bleibt anzumerken, dass gleiche Teilungen aber unterschiedliche Gewindegangbreiten durch entsprechend unterschiedliche Flankenbreiten realisiert werden können. Eine größere Gewindegangbreite der zweiten Einteilschnecke kann zudem zu einer entsprechend verkürzten Freidrehung im Einlauf der zweiten Einteilschnecke führen.

Gemäß einer weiteren Weiterbildung kann die Transporteinrichtung weiterhin einen synchronen Antrieb der ersten und zweiten Einteilschnecke umfassen, der dazu ausgebildet ist, die erste und zweite Einteilschnecke mit gleicher Rotationsgeschwindigkeit anzutreiben. Da unterschiedliche Rotationsgeschwindigkeiten der ersten und zweiten Einteilschnecke aufgrund der gleichen Teilung unweigerlich zu einer Verscherung und eventuell zum Bruch der beförderten Behälter führen würde, weist gemäß dieser Weiterbildung die Transporteinrichtung bevorzugt einen gemeinsamen, synchronen Antrieb der ersten und zweiten Einteilschnecke auf. Ein solcher synchroner Antrieb kann beispielsweise mittels eines gemeinsamen Antriebsmotors und Getrieben mit festen Übersetzungszahlen realisiert werden.

Mit den beschriebenen Vorrichtungen und Verfahren lässt sich ein Behälterstrom äußerst effektiv und störungsfrei von einer größeren Einlaufteilung auf eine kleinere Auslaufteilung zusammenfahren. Dabei wird die aufgrund der entsprechend höheren Einlaufgeschwindigkeit überschüssige Bewegungsenergie der Behälter mittels der Freidrehung der Einteilschnecke und des Transportbands bzw. der Transportkette auf kurzer Strecke dissipiert, was eine kompaktere Bauweise der Anlage ermöglicht. Zudem sind die Installationskosten aufgrund der kürzeren und einfacheren Einteilschnecken geringer. Ein Austausch der Einteilschnecke ist weiterhin nur noch bei sich ändernder Auslaufteilung erforderlich, was die Betriebskosten senkt.

Weitere Merkmale und beispielhafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im Weiteren beschriebenen Merkmale auch auf andere Weise miteinander kombiniert werden können.
- Fig. 1: stellt eine beispielhafte Ausführungsform einer Behälterbehandlungsanlage mit einer Transporteinrichtung gemäß der vorliegenden Erfindung dar.
- Fig. 2: stellt eine exemplarische Ausführungsform einer Einteilschnecke mit Freidrehung gemäß der vorliegenden Erfindung in Draufsicht dar.

In den im Folgenden beschriebenen Figuren bezeichnen gleiche Bezugszeichen gleiche Elemente. Zur besseren Übersichtlichkeit werden gleiche Elemente nur bei ihrem ersten Auftreten beschrieben. Es versteht sich jedoch, dass die mit Bezug auf eine der Figuren beschriebenen Varianten und Ausführungsformen eines Elements auch auf die entsprechenden Elemente in den übrigen Figuren angewendet werden können.

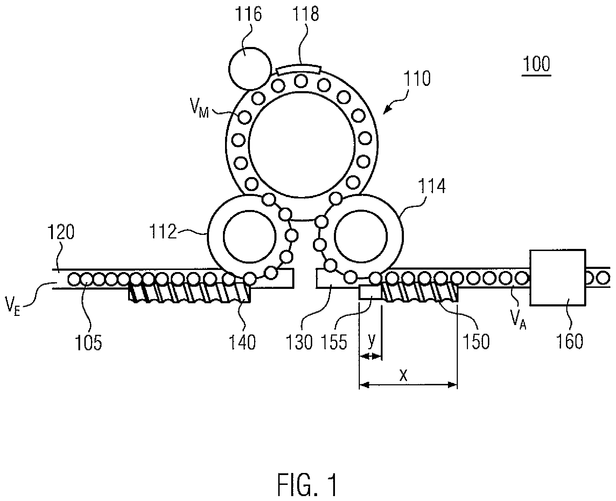

Fig. 1 stellt eine beispielhafte Ausführungsform einer Behälterbehandlungsanlage 100 mit einer Transporteinrichtung zum Teilungsverzug eines Behälterstroms dar. Dabei verbindet die Transporteinrichtung in dieser nicht limitierenden Ausführung eine Rundläufermaschine 110 mit einem Schrumpfhülsenaggregat 160. Entlang der Rundläufermaschine 110 laufen die Behälter 105 mit einer durch eine Verarbeitungsgeschwindigkeit einer in der Peripherie der Rundläufermaschine 110 angeordneten Etikettiervorrichtung 116 vorgegebenen Maschinengeschwindigkeit V_{M} um. Die dabei von der Etikettiervorrichtung 116 auf die Behälter 105 aufgebrachten Etiketten werden im Nachlauf von einer Andrückstation 118 an die Behälter angedrückt.

Um die Behälter 105 aus einem einlaufenden Behälterstrom, in dem die Behälter Stoß an Stoß auf einem Transportband 120 transportiert werden, der Rundläufermaschine 110 zuführen zu können, weist die Behälterbehandlungsanlage 100 einen Einlaufstern 112 und eine vorgeschaltete Einteilschnecke 140 mit zunehmender Teilung auf. Die vorgeschaltete Einteilschnecke 140 nimmt dabei die Behälter 105 auf und beschleunigt sie derart, dass ihr Abstand am Auslauf der Einteilschnecke 140 mit der Teilung des Einlaufsterns 112 übereinstimmt. Dabei kann das Transportband mit einer Geschwindigkeit V_{E} umlaufen, die der Maschinengeschwindigkeit V_{M} entspricht oder größer als diese ist.

Von der Rundläufermaschine 110 werden die etikettierten Behälter an einen Auslaufstern 114 übergeben, um sie zu einem nachgeschalteten Schrumpfhülsenaggregat 160 weiter zu befördern. Mittels des Schrumpfhülsenaggregats 160 werden Schrumpfhülsen auf die Behälter 105, insbesondere auf Flaschen, aufgeschossen. Dazu darf sich der von dem Aggregat behandelte Behälterstrom jedoch nur mit einer Auslaufgeschwindigkeit V_{A} bewegen, die beispielsweise halb so groß wie die Maschinengeschwindigkeit V_{M} ist. Entsprechend muss die Teilung des Behälterstroms von der Maschinenteilung der Rundläufermaschine 110 auf eine halb so große Auslaufteilung reduziert werden. Zu diesem Zweck übergibt der Transferstern 114 die von der Rundläufermaschine 110 aufgenommenen Behälter an eine Einteilschnecke 150, die erfindungsgemäß an ihrem Einlauf eine Freidrehung 155 aufweist. Im dargestellten, nicht limitierenden Beispiel ist die Freidrehung 155 zylindrisch ausgebildet und besitzt die Länge y, während die Gesamtlänge der Einteilschnecke 150 durch x gegeben ist.

Die Einteilschnecke ist dabei tangential beabstandet zu dem Transferstern 114 angeordnet, um Behälter von diesem am Anfang der Freidrehung 155 aufzunehmen. Die aufgenommenen Behälter besitzen bei der Übergabe zunächst weiterhin die Maschinengeschwindigkeit V_{M}, wobei sie gleichzeitig auf das mit der Auslaufgeschwindigkeit V_{A} umlaufende Transportband 130 gestellt werden. Aufgrund des Geschwindigkeitsunterschieds rutschen oder gleiten die Behälter entlang der Freidrehung 155 über die Oberfläche des Transportbands 130, wobei ein Teil ihrer Bewegungsenergie durch Reibung dissipiert wird. Endgültig auf die Auslaufgeschwindigkeit V_{A} abgebremst werden die Behälter jedoch beim Anschlag an die Flanken des ersten Gangs des Gewindes der Einteilschnecke 150. Da die Behälter somit bereits nach dem ersten Gang ihre Endgeschwindigkeit V_{A} erreicht haben, kann die Einteilschnecke 150 wesentlich kürzer ausgebildet werden als die im Stand der Technik bekannte Einteilschnecke 140. Die hier dargestellte Einteilschnecke 150 weist eine konstante Teilung auf. Jedoch sind auch Einteilschnecken denkbar, deren Teilung zum Auslauf hin abnimmt, um einen weiteren Geschwindigkeitsabbau zu bewirken.

Die Umlaufgeschwindigkeiten der Transportbänder 120 und 130 können dabei unabhängig voneinander, jedoch in Abhängigkeit von dem Durchsatz der jeweils nachfolgenden Behandlungseinheit, vorgegeben werden. Das Transportbahn 130 und die Einteilschnecke 150 werden jedoch im Allgemeinen synchron betrieben, so dass die Auslaufgeschwindigkeit der Behälter im letzten Gang der Einteilschnecke 150 aufgrund deren Rotation der Umlaufgeschwindigkeit V_{A} des Transportbands 130 entspricht.

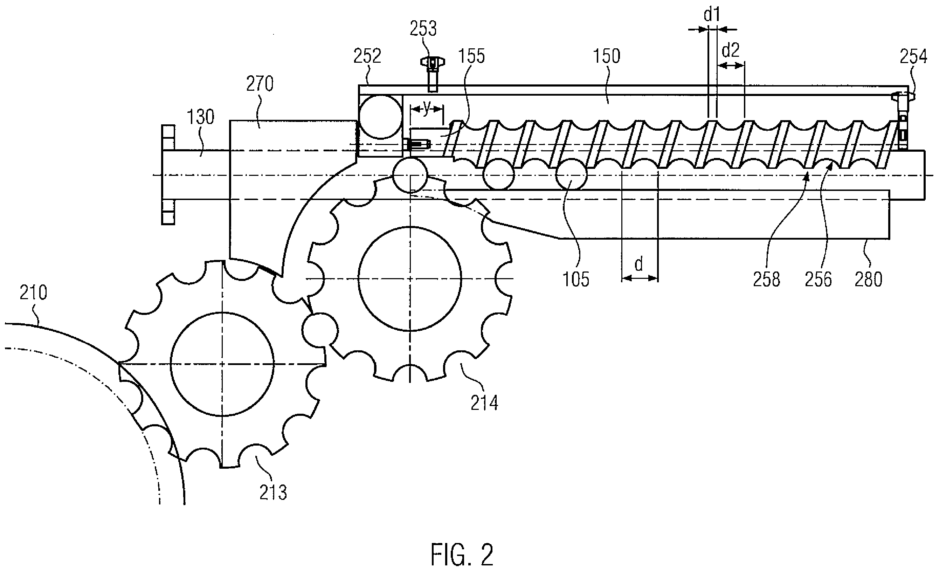

Fig. 2 zeigt eine Detaildarstellung einer Transporteinrichtung mit einer Einteilschnecke gemäß der vorliegenden Erfindung. Von einer Rundläufermaschine 210 werden die Behälter 105 mittels eines ersten Transfersterns 213 und eines zweiten Transfersterns 214 an die Freidrehung 155 der Einteilschnecke 150 übergeben. Auch in dieser Darstellung ist das umlaufende Transportband bzw. die umlaufende Transportkette 130 zu erkennen, wobei deutlich ist, dass sich das Transportband bzw. die Transportkette über die gesamte Länge der Einteilschnecke 150 hinaus erstreckt. Die Einteilschnecke 150 ist in dieser Ausführung mittels einer Halterung 252 gehaltert, die über Stellschrauben 253 und 254 verstellbar ist.

Weiterhin zeigt die Figur zwei Führungselemente für die Behälter 105. Ein gekrümmtes Führungsblech 270 ist entlang des Viertelkreises des Transfersterns 214 vor der Übergabe an die Freidrehung 155 angeordnet und geht in seiner Verlängerung stetig in die Oberfläche der Freidrehung 155 über. Dadurch werden die in Eingriff mit dem Transferstern 214 stehenden Behälter sicher zur Freidrehung 155 geführt und an diese übergeben. Weiterhin ist parallel zur Einteilschnecke 150, und insbesondere parallel zu deren freidrehenden Teil 155, ein Führungsgeländer 280 angeordnet, um die Behälter sicher entlang der Einteilschnecke 150 zu führen. Die Behälter können dabei aufrecht auf dem Transportband 130 stehende Dosen oder Flaschen sein, deren oberer Teil, insbesondere Flaschenhals, in Eingriff mit der Einteilschnecke 150 steht und zwischen dieser und dem Führungsgeländer 280 geführt wird.

Die hier dargestellte, exemplarische Einteilschnecke 150 weist ein gerundetes Trapezgewinde mit konstanter Teilung **d** auf. Die Flanken des Gewindes haben dabei ein flaches Außenprofil und besitzen eine Flankenbreite der Länge **d₁**. Die Gewindegangbreite, d. h. der maximale Abstand zwischen den beiden Flanken eines Gewindegangs 256 ist dabei mit **d₂** bezeichnet. Die konstante Teilung **d** ergibt sich dabei als Summe aus der Flankenbreite **d₁** und der Gewindegangbreite **d₂**. Im vorliegenden Fall ist die Form des Gewindes einem kreisförmigen Behälterabschnitt angepasst. Andere Gewindeformen und -größen sind je nach zu transportierendem Behältertyp bzw. Behälterform vorstellbar.

Die dargestellte Transporteinrichtung mit Einteilschnecke 150 mit Freidrehung 155 erlaubt einen raschen und störungsfreien Geschwindigkeitsabbau der mittels Transferstern 214 zugeführten Behälter. Die Länge der zylindrischen Freidrehung beträgt dabei mindestens die Summe aus dem maximalen Behälterdurchmesser in Förderrichtung und der Differenz der Einlaufteilung minus der Auslaufteilung. Wegen der konstanten Teilung kann die Einteilschnecke 150 gegenüber einer bekannten Einteilschnecke erheblich verkürzt werden.

## Patentansprüche

1. Transporteinrichtung zum Geschwindigkeitsabbau eines Behälterstroms in einer Behälterbehandlungsanlage mit mindestens einer Einteilschnecke (150), wobei die Einteilschnecke (150) in ihrem Einlauf eine Freidrehung (155), d. h. einen Abschnitt ohne Gewinde, aufweist, **gekennzeichnet durch**
ein Transportband (130) oder eine Transportkette (130), welches oder welche mindestens entlang der gesamten Länge der Einteilschnecke (150) derart angeordnet ist, dass mit der Einteilschnecke (150) in Eingriff stehende Behälter (105) darauf stehen, und
einem Antrieb für das Transportband (130) oder die Transportkette (130) und einer Steuer- und/oder Regeleinrichtung, die dazu ausgebildet ist, den Antrieb derart zu steuern und/oder zu regeln, dass das Transportband (130) oder die Transportkette (130) synchron mit einer Geschwindigkeit der Behälter (105) am Auslauf der Einteilschnecke (150) umläuft, und **durch**
einen Transferstern (114, 214), wobei der Transferstern (114, 214) derart am Einlauf der Einteilschnecke (150) angeordnet ist, dass in Eingriff mit dem Transferstern (114, 214) stehende Behälter (105) in Eingriff mit dem freidrehenden Teil (155) der Einteilschnecke (150) gebracht und auf das Transportband (130) oder die Transportkette (130) gestellt werden können.

2. Transporteinrichtung nach Anspruch 1, wobei die Einteilschnecke (150) eine konstante Teilung hat.

3. Transporteinrichtung nach Anspruch 1, wobei die Einteilschnecke (150) eine von ihrem Einlauf zu ihrem Auslauf hin abnehmende Teilung hat.

4. Transporteinrichtung nach einem der Ansprüche 1 bis 3, wobei eine Länge der Freidrehung (155) mindestens 80 mm, bevorzugt mindestens 100 mm, besonders bevorzugt mindestens 120 mm beträgt.

5. Transporteinrichtung nach einem der vorhergehenden Ansprüche, wobei umfangseitig entlang eines Segments des Transfersterns (114, 214) ein gekrümmtes Führungselement (270) derart angeordnet ist, dass in Eingriff mit dem Transferstern (114, 214) stehende Behälter (105) entlang des gekrümmten Führungselements (270) bis zur Freidrehung (155) der Einteilschnecke (150) geführt werden können.

6. Transporteinrichtung nach einem der vorhergehenden Ansprüche, weiterhin ein geradliniges Führungselement (280) umfassend, das parallel zur Einteilschnecke (150) angeordnet ist. wobei sich das geradlinige Führungselement (280) insbesondere mindestens über die Freidrehung (155) und einen ersten Gang der Einteilschnecke (150) erstreckt.

7. Transporteinrichtung nach einem der vorhergehenden Ansprüche, weiterhin mindestens eine erste und eine zweite Einteilschnecke umfassend,
wobei die zweite Einteilschnecke ebenfalls eine Freidrehung aufweist und die gleiche Teilung wie die erste Einteilschnecke (150), aber eine von einer Gewindegangbreite der ersten Einteilschnecke (150) verschiedene Gewindegangbreite hat; und
wobei die zweite Einteilschnecke derart parallel und vertikal verschoben zur ersten Einteilschnecke (150) angeordnet ist, dass die Freidrehungen der ersten und der zweiten Einteilschnecke zumindest teilweise überlappen und ein mit einem ersten Behälterabschnitt in Eingriff mit der ersten Einteilschnecke (150) stehender Behälter (105) mit einem zweiten Behälterabschnitt in Eingriff mit der zweiten Einteilschnecke steht.

8. Transporteinrichtung nach Anspruch 7, weiterhin einen synchronen Antrieb der ersten und zweiten Einteilschnecke (150) umfassend, der dazu ausgebildet ist, die erste und zweite Einteilschnecke (150) mit gleicher Rotationsgeschwindigkeit anzutreiben.

9. Behälterbehandlungsanlage zum Behandeln von Behältern in der Getränke verarbeitenden Industrie, umfassend eine erste Behandlungseinheit (116), insbesondere eine Etikettiervorrichtung, zur Behandlung eines Behälterstroms und eine zweite Behandlungseinheit (160), insbesondere ein Schrumpfhülsenaggregat, zur weiteren Behandlung des Behälterstroms,
eine Transporteinrichtung nach einem der vorhergehenden Ansprüche zum Transport der Behälter, die zwischen der ersten und der zweiten Behandlungseinheit (116, 160) angeordnet ist; und wobei die Transporteinrichtung dazu ausgebildet ist, eine in Abhängigkeit von der ersten Behandlungseinheit (116) vorgegebene Einlaufteilung des Behälterstroms auf eine in Abhängigkeit von der zweiten Behandlungseinheit (160) vorgegebene Auslaufteilung des Behälterstroms anzupassen.

10. Verfahren zum Teilungsverzug eines Behälterstroms mittels einer Transporteinrichtung nach
einem der Ansprüche 1 bis 8, die folgenden Schritte umfassend:
Zuführen des Behälterstroms mit einer vorgegebenen Einlaufteilung zu dem mit der Freidrehung (155), d. h. einem Abschnitt ohne Gewinde, ausgebildeten Einlauf der Einteilschnecke (150); gesteuertes Rotieren der Einteilschnecke (150) mit einer in Abhängigkeit von einer vorbestimmten Auslaufgeschwindigkeit und einer Auslaufsteigung der Einteilschnecke (150) bestimmten Rotationsgeschwindigkeit; und
synchrones Antreiben des umlaufenden Transportbandes (130) oder der umlaufenden Transportkette (130) mit der vorbestimmten Auslaufgeschwindigkeit.

11. Verfahren nach Patentanspruch 10, wobei die Einteilschnecke (150) dazu ausgebildet ist, eine Teilung eines einlaufenden Behälterstroms von einer Einlaufteilung auf eine Auslaufteilung eines auslaufenden Behälterstroms zu reduzieren; und
wobei eine Länge der Freidrehung (155) mindestens eine Länge beträgt, die aus der Summe aus der Differenz der Einlaufteilung minus der Auslaufteilung und einem Durchmesser der zu transportierenden Behälter (105) berechnet wird.

## Claims

1. Transport apparatus for reducing the speed of a container flow in a container treatment system having at least one distribution screw (150), the distribution screw (150) having a free rotation (155), i.e. a portion without a thread, in its inlet, **characterised by** a transport belt (130) or a transport chain (130) which is arranged at least along the entire length of the distribution screw (150) in such a way that containers (105) which engage with the distribution screw (150) stand thereon, and
a drive for the transport belt (130) or the transport chain (130) and an open-loop and/or closed-loop device which is designed to control the drive in an open-loop and/or closed-loop manner in such a way that the transport belt (130) or the transport chain (130) circulates synchronously at a speed of the containers (105) at the outlet of the distribution screw (150),
and by a transfer star wheel (114, 214), the transfer star wheel (114, 214) being arranged at the inlet of the distribution screw (150) in such a way that containers (105) which engage with the transfer star wheel (114, 214) are brought into engagement with the freely rotating part (155) of the distribution screw (150) and can be placed on the transport belt (130) or the transport chain (130).

2. Transport apparatus according to claim 1, wherein the distribution screw (150) has a constant pitch.

3. Transport apparatus according to claim 1, wherein the distribution screw (150) has a pitch which decreases from its inlet to its outlet.

4. Transport apparatus according to any of claims 1 to 3, wherein a length of the free rotation (155) is at least 80 mm, preferably at least 100 mm, particularly preferably at least 120 mm.

5. Transport apparatus according to any of the preceding claims, wherein a curved guide element (270) is arranged peripherally along a segment of the transfer star wheel (114, 214) in such a way that containers (105) which engage with the transfer star wheel (114, 214) can be guided along the curved guide element (270) up to the free rotation (155) of the distribution screw (150).

6. Transport apparatus according to any of the preceding claims, further comprising a straight guide element (280) which is arranged in parallel with the distribution screw (150), wherein the straight guide element (280) extends in particular at least over the free rotation (155) and a first thread of the distribution screw (150).

7. Transport apparatus according to any of the preceding claims, further comprising at least a first and a second distribution screw,
wherein the second distribution screw also has a free rotation and has the same pitch as the first distribution screw (150) but a thread width which is different from a thread width of the first distribution screw (150); and
wherein the second distribution screw is arranged in parallel with and vertically displaced to the first distribution screw (150) in such a way that the free rotations of the first and second distribution screws overlap at least partially and a container (105) having a first container portion which engages with the first distribution screw (150) has a second container portion which engages with the second distribution screw.

8. Transport apparatus according to claim 7, further comprising a synchronous drive of the first and second distribution screws (150) which is designed to drive the first and second distribution screw s (150) at the same rotational speed.

9. Container treatment system for treating containers in the beverage processing industry, comprising a first treatment unit (116), in particular a labelling device, for treating a container flow and a second treatment unit (160), in particular a shrink sleeve unit, for further treating the container flow,
a transport apparatus according to any of the preceding claims for transporting the containers, which is arranged between the first and second treatment units (116, 160); and
wherein the transport apparatus is designed to adapt an inlet pitch of the container flow specified on the basis of the first treatment unit (116) to an outlet pitch of the container flow specified on the basis of the second treatment unit (160).

10. Method for reducing the pitch of a container flow by means of a transport apparatus according to any of claims 1 to 8, comprising the following steps:
feeding the container flow having a predetermined inlet pitch to the inlet of the distribution screw (150) which is formed with the free rotation (155), i.e. a portion without a thread; rotating, in a controlled manner, the distribution screw (150) at a rotational speed determined on the basis of a predetermined outlet speed and an outlet pitch of the distribution screw (150); and
synchronously driving the circulating transport belt (130) or the circulating transport chain (130) at the predetermined outlet speed.

11. Method according to claim 10, wherein the distribution screw (150) is designed to reduce a pitch of an incoming container flow from an inlet pitch to an outlet pitch of an outgoing container flow; and
wherein a length of the free rotation (155) is at least a length which is calculated from the sum of the difference between the inlet pitch minus the outlet pitch and a diameter of the containers (105) to be transported.

## Revendications

1. Dispositif de transport pour ralentir la vitesse d'un flux de récipients dans une installation de manipulation de récipients avec au moins une vis sans fin d'écartement (150), dans lequel la vis sans fin d'écartement (150) présente dans son entrée une partie en rotation libre (155), c'est-à-dire une section sans filetage, **caractérisé par** :
une bande de transport (130) ou une chaîne de transport (130) qui est agencée au moins sur toute la longueur de la vis sans fin d'écartement (150) de telle sorte que des récipients (105) en prise avec la vis sans fin d'écartement (150) se trouvent sur celle-ci, et
un entraînement pour la bande de transport (130) ou la chaîne de transport (130) et un dispositif de commande et/ou de régulation qui est conçu pour commander et/ou réguler l'entraînement de telle sorte que la bande de transport (130) ou la chaîne de transport (130) circule en synchronisme avec une vitesse des récipients (105) à la sortie de la vis sans fin d'écartement (150),
et par
une étoile de transfert (114, 214), dans lequel l'étoile de transfert (114, 214) est agencée à l'entrée de la vis sans fin d'écartement (150) de telle sorte que des récipients (105) en prise avec l'étoile de transfert (114, 214) puissent être amenés en prise avec la partie en rotation libre (155) de la vis sans fin d'écartement (150) et placés sur la bande de transport (130) ou la chaîne de transport (130).

2. Dispositif de transport selon la revendication 1, dans lequel la vis sans fin d'écartement (150) a un pas constant.

3. Dispositif de transport selon la revendication 1, dans lequel la vis sans fin d'écartement (150) présente un pas décroissant de son entrée vers sa sortie.

4. Dispositif de transport selon l'une quelconque des revendications 1 à 3, dans lequel une longueur de la partie en rotation libre (155) est d'au moins 80 mm, de préférence d'au moins 100 mm, de manière particulièrement préférée d'au moins 120 mm.

5. Dispositif de transport selon l'une quelconque des revendications précédentes, dans lequel un élément de guidage incurvé (270) est agencé périphériquement le long d'un segment de l'étoile de transfert (114, 214) de manière à ce que des récipients (105) en prise avec l'étoile de transfert (114, 214) puissent être guidés le long de l'élément de guidage incurvé (270) jusqu'à la partie en rotation libre (155) de la vis sans fin d'écartement (150).

6. Dispositif de transport selon l'une quelconque des revendications précédentes, comprenant en outre un élément de guidage rectiligne (280) qui est agencé parallèlement à la vis sans fin d'écartement (150), dans lequel l'élément de guidage rectiligne (280) s'étend en particulier au moins sur la rotation libre (155) et un premier passage de la vis sans fin d'écartement (150).

7. Dispositif de transport selon l'une quelconque des revendications précédentes, comprenant en outre au moins une première et une seconde vis sans fin d'écartement, dans lequel la seconde vis sans fin d'écartement présente également une rotation libre et a le même pas que la première vis sans fin d'écartement (150), mais une largeur de filet différente d'une largeur de filet de la première vis sans fin d'écartement (150) ; et dans lequel la seconde vis sans fin d'écartement est agencée parallèlement et décalée verticalement par rapport à la première vis sans fin d'écartement (150) de telle sorte que les rotations libres de la première et de la seconde vis sans fin d'écartement se chevauchent au moins partiellement et qu'un récipient (105) se trouvant via un premier tronçon de récipient en prise avec la première vis sans fin d'écartement (150) soit en prise avec la seconde vis sans fin d'écartement via un premier tronçon de récipient.

8. Dispositif de transport selon la revendication 7, comprenant en outre un entraînement synchrone des première et seconde vis sans fin d'écartement (150) qui est conçu pour entraîner les première et seconde vis sans fin d'écartement (150) à la même vitesse de rotation.

9. Installation de traitement de récipients pour le traitement de récipients dans l'industrie de transformation de boissons, comprenant une première unité de traitement (116), en particulier un dispositif d'étiquetage, pour le traitement d'un flux de récipients, et une seconde unité de traitement (160), en particulier une unité de manchon rétractable, pour un traitement ultérieur du flux de récipients,
un dispositif de transport selon l'une quelconque des revendications précédentes pour transporter les récipients, qui est agencé entre les première et seconde unités de traitement (116, 160) ; et
dans lequel le dispositif de transport est conçu pour adapter une division d'entrée du flux de récipient prédéterminée en fonction de la première unité de traitement (116) à une division de sortie du flux de récipient prédéterminée en fonction de la seconde unité de traitement (160).

10. Procédé de séparation à retard d'un flux de récipients au moyen d'un dispositif de transport selon l'une quelconque des revendications 1 à 8, comprenant les étapes suivantes consistant à :
amener le flux de récipients avec un pas d'entrée prédéterminé à celui avec la partie en rotation libre (155), c'est-à-dire une section sans filetage, formée à l'entrée de la vis sans fin d'écartement (150) ;
mettre en rotation commandée la vis sans fin d'écartement (150) à une vitesse de rotation déterminée en fonction d'une vitesse de sortie prédéterminée et d'un pas de sortie de la vis sans fin (150) ; et
entraîner de manière synchrone la bande de transport rotative (130) ou de la chaîne de transport rotative (130) à la vitesse de sortie prédéterminée.

11. Procédé selon la revendication 10, dans lequel la vis sans fin (150) est conçue pour ralentir une séparation d'un flux de récipients entrant d'un pas d'entrée à un pas de sortie d'un flux de récipients sortant ; et
dans lequel une longueur de la partie en rotation libre (155) est au moins une longueur calculée à partir de la somme de la différence de du pas d'entrée moins le pas de sortie et d'un diamètre des récipients (105) à transporter.
